# EUROPEAN PATENT APPLICATION

(11) **EP 1 099 857 A1**
(43) Date of publication of application: **16.05.2001**
(21) Application number: 00123434.3
(22) Date of filing: 03.11.2000
(51) Int. Cl.: F15B 15/14, B62D 33/067

(54) **A control cylinder**

(30) Priority: 09.11.1999 NL 1013528
(71) Applicant: MAASLAND N.V., 3155 PD Maasland (NL)
(72) Inventor: van den Engel, Alfonsus Jacobus, 3123 CM Schiedam (NL)
(74) Representative: Corten, Maurice Jean F.M.

(57) **Abstract**

The invention relates to a control cylinder (1) comprising a housing (2) accommodating a movable piston (3) that fits the inner walls of the housing (2) and is provided with a piston rod (4), said piston (3) dividing the housing (2) into a first and a second chamber (5; 6) which are each provided with respectively a first and a second aperture (7; 8) for supplying a medium, such as e.g. oil, to the chambers or discharging same therefrom. The control cylinder (1) is further provided with connecting means (9) that connect the first chamber (5) to the second chamber (6) during a predetermined period of time and/or across a predetermined length when the piston (3) is moved in the housing (2) via respectively a third and a fourth aperture in the first and the second chamber (5; 6), thus permitting the medium to flow freely from the first chamber (5) to the second chamber (6) or vice versa.

## Description

The invention relates to a control cylinder comprising a housing accommodating a movable piston that fits the inner walls of the housing and is provided with a piston rod, said piston dividing the housing into a first and a second chamber which are each provided with respectively a first and a second aperture for supplying a medium, such as e.g. oil, to the chambers or discharging same therefrom.

Such a control cylinder is known.

It is an objective of the invention to improve such a control cylinder.

According to the invention this is achieved in that the control cylinder is provided with connecting means that connect the first chamber to the second chamber during a predetermined period of time and/or across a predetermined length when the piston is moved in the housing via respectively a third and a fourth aperture in the first and the second chamber, thus permitting the medium to flow freely from the first chamber to the second chamber or vice versa. Such a control cylinder has the advantage that, despite of being put under pressure, it is only activated by the medium after a predetermined period of time has elapsed or after the piston has been moved in the housing across a predetermined length. During said time the control cylinder, for example when the latter is included in a hydraulic circuit, can passively move along with other moving parts and afterwards actively carry out a movement itself.

In accordance with a first embodiment of the invention, the connecting means are constituted by a bore in the piston. The bore in the piston has the advantage of being located inside the housing and, as a consequence, of being less sensitive to damage and/or contamination.

In accordance with a second embodiment of the invention, the connecting means are constituted by a line that is fastened to the outer side of the housing and interconnects the first and the second chamber. According to a further inventive feature, in the bore or in the line there are included control means with the aid of which the bore or the line can be shut off and/or with the aid of which the direction of flow of the medium through the bore or the line is determined. In a preferred embodiment the control means comprise a non-return valve. According to a further inventive feature, the non-return valve is constituted by a controlled or a spring loaded non-return valve. According to another aspect of the invention, the control means comprise two non-return valves. According to another inventive feature, the control means comprise an electromagnetically and/or hydraulically operated sliding valve. In a preferred embodiment of the invention the control means are operated mechanically. According to a further inventive feature, the mechanical operation comprises a spring with a stop. The control means are activated by means of the stop. According to a further inventive feature, the stop is movable against spring action. According to again another inventive feature, the stop and the spring are located in the first and/or the second chamber at an end thereof.

The invention further relates to a control system comprising various control cylinders of which at least one control cylinder is designed as described above. According to a further inventive feature, the control cylinder is constituted by a hydraulic control cylinder.

According to the invention, the control cylinder or the control system as described above is especially suitable for being included in a haymaking machine, in particular a tedder.

The invention will now be explained in further detail with reference to an exemplary embodiment in which:
Figure 1 is a longitudinal cross-section of a control cylinder according to the invention, and
Figure 2 shows a control system in which the control cylinder according to Figure 1 is included.

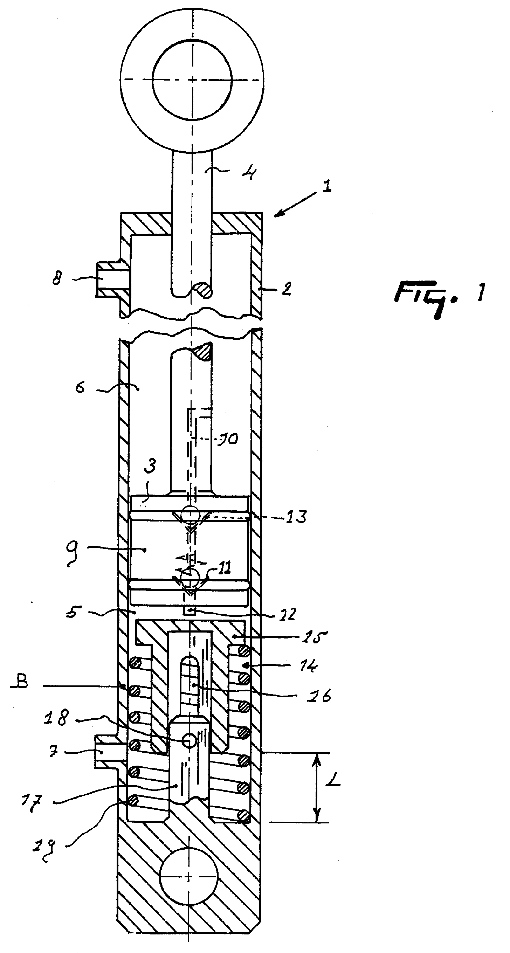

Figure 1 is a longitudinal cross-section of a control cylinder 1 comprising a housing 2 accommodating a movable piston 3 that fits the inner walls of the housing 2 and is provided with a piston rod 4. The piston 3 divides the housing 2 into a first chamber 5 and a second chamber 6. The first chamber 5 is provided with a first aperture 7 via which a medium, such as e.g. oil, can be supplied to the first chamber 5 or be discharged therefrom. The second chamber 6 comprises a second aperture 8 via which it is also possible for a medium, such as e.g. oil, to flow into or out of the second chamber. The control cylinder 1 is provided with connecting means 9 that are capable of connecting the first chamber 5 to the second chamber 6. The connecting means 9 are constituted by a bore 10 which is provided through the piston 3 and through a part of the piston rod 4. The two ends of the bore 10 comprise respectively a third and a fourth aperture. In the bore 10 there is included a first spring loaded non-return valve 11 which is connected to a pin 12 and which ensures, when the pin 12 is pressed, that the first chamber 5 is connected to the second chamber 6. In the bore 10 there is further included a second non-return valve 13 which ensures that the medium can only flow from the first chamber 5 to the second chamber 6. In the first chamber 5 there are further included control means 14 which activate the first spring loaded non-return valve 11 by pressing the pin 12. The control means 14 comprise a stop 15 which is provided with a slotted hole 16. The stop 15 is slid over a round projecting portion 17 of the housing 2 and is secured by means of a locking pin 18 which is passed through the round portion 17 and the slotted hole 16. The stop 15 can be disposed over the round portion 17 across the full length of the slotted hole 16. Between the stop 15 and the end of the first chamber 5 there is provided a compression spring 19, the arrangement being such that the stop 15 can be pressed against spring action.

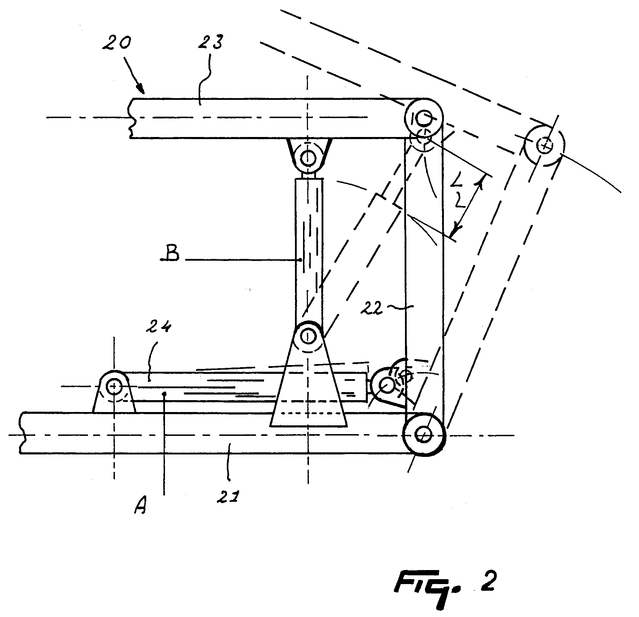

Figure 2 shows a rod assembly 20 comprising a first beam 21 which is hingeably connected to a second beam 22 that is hingeably connected itself to a third beam 23. Between the first beam 21 and the second beam 22 there is included a hydraulically operable cylinder 24, while the control cylinder 1 according to the invention is included between the first beam 21 and the third beam 23. The control cylinder 1 according to the invention operates as follows:
When the rod assembly 20 is in the folded in position, which is indicated by solid lines, the piston rod 4 is completely retracted in the housing 2 so that the piston 3 pushes the stop 15 against spring action against the wall of the housing 2. The pin 12 is then pressed by the stop 15 so that the medium can flow freely from the first chamber 5 to the second chamber 6. As long as there is an open connection between the first chamber 5 and the second chamber 6 it is impossible to activate the control cylinder because the medium can flow freely through the piston 3. The cylinder 24, constituted by a normal control cylinder, moves the first beam 21 by rotation relative to the second beam 22 through an angle as indicated by broken lines in Figure 2. During this movement the piston rod 4 is pulled out of the housing 2 and the stop 15 moves along with the piston 3. During this movement the control cylinder 1 is not active because of the open connection through the piston 3. Not until the stop 15 cannot be moved further due to the fact that the locking pin 18 has arrived at the end of the slotted hole 16, the piston 3, and consequently also the pin 12, comes loose from the stop 15. As a result thereof the first spring loaded non-return valve 11 is shut. At that moment the control cylinder 1 is comparable to an ordinary control cylinder so that, when oil flows into the first chamber 5, the piston is moved in the housing 2 under the influence of the oil. At that moment the third beam 23 is rotated relative to the second beam 22. The first spring loaded non-return valve 11 can then only be opened if an extremely high pressure develops in the first chamber 5 causing the pin 12 to be pressed under the influence of the medium. The first spring loaded non-return valve 11 then serves as a safety valve.
When the rod assembly 20 is being folded in there is put pressure on the second aperture 8 so that the piston 3 is moved in opposite direction. The second non-return valve 13 prevents medium from flowing from the second chamber 6 to the first chamber 5. This is in particular of importance when the piston 3 with the pin 12 comes against the stop 15 as a result of which the first spring loaded non-return valve 11 is opened. In this manner it is possible to press the stop 15 against spring action without permitting medium to flow through the piston 3.

## Claims

1. A control cylinder (1) comprising a housing (2) accommodating a movable piston (3) that fits the inner walls of the housing (2) and is provided with a piston rod (4), said piston (3) dividing the housing (2) into a first and a second chamber (5; 6) which are each provided with respectively a first and a second aperture (7; 8) for supplying a medium, such as e.g. oil, to the chambers or discharging same therefrom, characterized in that the control cylinder (1) is provided with connecting means (9) that connect the first chamber (5) to the second chamber (6) during a predetermined period of time and/or across a predetermined length when the piston (3) is moved in the housing (2) via respectively a third and a fourth aperture in the first and the second chamber (5; 6), thus permitting the medium to flow freely from the first chamber (5) to the second chamber (6) or vice versa.

2. A control cylinder as claimed in claim 1, characterized in that the connecting means (9) are constituted by a bore (10) in the piston (3).

3. A control cylinder as claimed in claim 1, characterized in that the connecting means (9) are constituted by a line that is fastened to the outer side of the housing (2) and interconnects the first and the second chamber (5; 6).

4. A control cylinder as claimed in claim 2 or 3, characterized in that in the bore (10) or in the line there are included control means (14) with the aid of which the bore (10) or the line can be shut off and/or with the aid of which the direction of flow of the medium through the bore (10) or the line is determined.

5. A control cylinder as claimed in claim 4, characterized in that the control means (14) comprise a non-return valve (11; 13).

6. A control cylinder as claimed in claim 5, characterized in that the non-return valve (11; 13) is constituted by a controlled or a spring loaded non-return valve.

7. A control cylinder as claimed in claim 5 or 6, characterized in that the control means (14) comprise two non-return valves (11; 13).

8. A control cylinder as claimed in any one of claims 4 to 7, characterized in that the control means (14) comprise an electromagnetically and/or hydraulically operated sliding valve.

9. A control cylinder as claimed in any one of claims 4 to 8, characterized in that the control means (14) are operated mechanically.

10. A control cylinder as claimed in claim 9, characterized in that the mechanical operation comprises a spring (19) with a stop (15).

11. A control cylinder as claimed in claim 10, characterized in that the stop (15) is movable against spring action.

12. A control cylinder as claimed in claim 10 or 11, characterized in that the stop (15) and the spring (19) are located in the first and/or the second chamber (5; 6) at an end thereof.

13. A control system comprising various control cylinders of which at least one control cylinder (1) is designed as described in any one of claims 1 to 12.

14. A control system as claimed in claim 13, characterized in that the control cylinders (1) are constituted by hydraulic cylinders.

15. A haymaking machine, in particular a tedder, provided with a control cylinder (1) and/or a control system as described in any one of claims 1 to 14.
